# EUROPÄISCHE PATENTSCHRIFT

(11) **EP 1 608 878 B1**
(45) Veröffentlichungstag und Bekanntmachung des Hinweises auf die Patenterteilung: **19.11.2008**
(21) Anmeldenummer: 04723972.8
(22) Anmeldetag: 29.03.2004
(51) Int. Cl.: F16B 21/18

(54) **Gesicherte Wellen-Nabenverbindung**
Locked hub-shaft connection
Une connexion verrouillée entre arbre-moyeu

(30) Priorität: 28.03.2003 DE 10314202
(43) Veröffentlichungstag der Anmeldung: 28.12.2005
(73) Patentinhaber: Shaft-Form-Engineering GmbH, 63165 Mühlheim am Main (DE)
(72) Erfinder: JACOB, Werner, 60599 Frankfurt (DE)
(74) Vertreter: von Puttkamer, Nikolaus
(86) Internationale Anmeldenummer: PCT/DE2004/000650
(87) Internationale Veröffentlichungsnummer: WO 2004/088152

(56) Entgegenhaltungen:
- EP-A- 0 682 345
- WO-A-92/09815
- DE-A- 3 414 834
- FR-A- 980 814
- US-A- 3 592 517
- US-A- 5 606 939

## Beschreibung

Die vorliegende Erfindung betrifft Wellenteil und ein Ringteil mit einem Sicherungsring nach dem Oberbegriff des Patentanspruchs 1.

Derartige Anordnungen sind bekannt. Beispielsweise geht aus der DE 41 09 481 C2 ein Sprengring hervor, der eine Ringöffnung zum federnden Einrasten in eine mit einer Nutschräge versehene Innennute oder Eindrehung in einer Innenöffnung eines Ringteiles und eine mit Radialfreiraum zur Montage versehene Außennute auf einem Zapfen zur Herstellung einer lösbaren Schnappverbindung zwischen Ringteil und Zapfen dient. Der Sprengring wird zur Montage aufgebogen und auf den Zapfen aufgeschoben, bis er in die Außennute desselben einrastet. Anschließend wird der Zapfen mit dem montierten Sprengring in die Innenöffnung des mit einer Stirnschräge versehenen Ringteiles eingeschoben, wobei der Sprengring zusammengedrückt wird und bei Erreichen der Innennute des Ringteiles radial ausfedert, um den Zapfen und das Ringteil axial aneinander zu verriegeln.

Ein Problem eines derartigen Sprengringes besteht darin, dass er nach seiner Montage auf dem Zapfen in der Außennute derselben nicht ideal zentriert ist, sodass sein Einsetzen in das Ringteil insofern nachteilig ist, als an dem Ringteil eine große Phase bzw. Stirnschräge zum Einbringen des Zapfens mit dem montierten Sprengring in die Innenöffnung des Ringteiles oder eine spezielle Hilfsvorrichtung hierfür erforderlich ist.

Aus der WO 92/09815 geht ein c-förmig ausgestalteter Sicherungsring hervor, der ein in eine Bohrung eines Ringteiles eingeschobenes Wellenteil mit dem Ringteil verbindet. Die freien Enden des Sicherungsringes greifen jedoch nicht ausschließlich in die Innennute des Ringsteiles ein, sodass sie beim Einschieben des Wellenteiles in das Ringteil axial verschoben werden können.

Die Aufgabe der vorliegenden Erfindung besteht daher darin ein Wellenteil und ein Ringteil mit einem Sicherungsring zu schaffen, wobei der Sicherungsring bereits vor dem Fügen der Verbindung zwischen dem Wellenteil und dem Ringteil vergleichsweise exakt in der Innennut des Ringteiles zentriert ist, sodass sich bei dem Einbringen des am Ringteil zu befestigenden Wellenteiles eine gut reproduzierbare Kraft zum Spreizen des Sicherungsringes an einer Phase des Wellenteiles ergibt.

Diese Aufgabe wird durch ein Wellenteil und ein Ringteil mit einem Sicherungsring mit den Merkmalen des Patentanspruches 1 gelöst.

Der wesentliche Vorteil des vorliegenden Wellenteiles und Ringteiles mit einem Sicherungsring besteht darin, dass sich bei der Herstellung einer Verbindung zwischen dem Wellenteil und dem Ringteil eine sehr gut reproduzierbare und gleichmäßige Kraft zum Spreizen des Sicherungsringes im Bereich einer Einfahrschräge bzw. Phase des Wellenteiles ergibt. Dadurch kann durch eine Kraftüberwachung bei der Montage ein sicheres Einrasten problemlos erfasst und nachgewiesen werden. Vorteilhafterweise ergeben sich bei der Anordnung des Sicherungsringes auch bei hohen Drehzahlen keine Unwuchtprobleme.

Von besonderer Bedeutung und von Vorteil ist es dabei, dass die Endbereiche an der Öffnung bzw. Teilung des Sicherungsringes nach dem Auffedern desselben in der Innennut des Ringteiles angeordnet sind, so dass sie insbesondere beim Einschieben des Wellenteiles nicht axial verschoben werden können. Vorteilhafterweise sind bei der Herstellung der Verbindung zwischen dem Wellenteil und dem Ringteil keine speziellen Hilfsvorrichtungen erforderlich.

Bei einer besonderen Ausführungsform der vorliegenden Erfindung ist die Innennute des Wellenteiles an wenigstens einer Seite schräg angephast, sodass eine Lösung der zwischen Wellenteil und Ringteil hergestellten Verbindung unter Aufbringung einer ausreichend hohen axialen Kraft möglich ist. Dagegen kann bei scharfkantig ausgeführten Innennuten des Wellenteiles eine Trennung der Verbindung zwischen Wellenteil und Ringteil nur durch ein gewaltsames Abscheren des Sicherungsringes erfolgen.

Der Sicherungsring kann einen Materialquerschnitt besitzen, der insbesondere dreieck- oder vieleckförmig, oval oder elliptisch beschaffen ist, wobei es besonders vorteilhaft ist, wenn der Sicherungsring über den Umfang des Wellenteiles gesehen möglichst gleichmäßig an diesem zur Anlage gelangt, wenn das Wellenteil in das Ringteil, in dessen Innennute, der Sicherungsring eingesetzt ist, eingeschoben wird.

Vorteilhafte Ausgestaltungen der Erfindung gehen aus den Unteransprüchen hervor.

Im Folgenden werden die Erfindungen und deren Ausgestaltungen im Zusammenhang mit den Figuren näher erläutert. Es zeigen
Figur 1 eine Schnittdarstellung des montierten, eine Verbindung zwischen einem Wellenteil und einem Ringteil herstellenden Sicherungsringes;
Figuren 2a und 2b einen Querschnitt des Ringteiles sowie einen Querschnitt des zum Einsetzen in die Innennute des Ringteiles spiralartig zusammengedrückten Sicherungsringes;
Figuren 3a und 3b einen Querschnitt des Ringteiles und einen Querschnitt des in die Innennute des Ringteiles eingesetzten Sicherungsringes;
Figuren 4a und 4b einen Querschnitt des Ringteiles sowie des gerade in die Innenöffnung des Ringteiles eingesetzten Wellenteiles bzw. des gerade an der Phase des Wellenteiles aufgeweiteten Sicherungsringes;
Figur 5 einen Querschnitt des Ringteiles und des damit verbundenen Wellenteiles; und
Figuren 6 und 7 Ausgestaltungen der Erfindung.

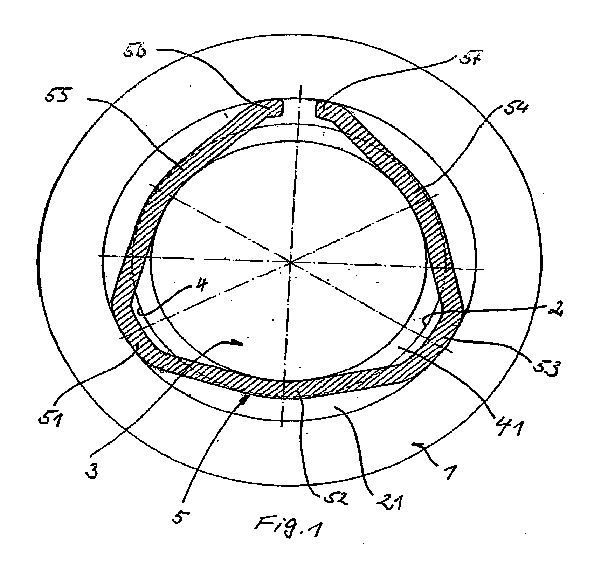

In der Figur 1 sind ein ringförmiges Ringteil mit 1, ein Wellenteil mit 3 und ein Sicherungsring mit 5 bezeichnet.

Das ringförmige Ringteil 1 umschließt eine kreisförmige Innenöffnung 2, in der eine ringförmige Innennute 21 angeordnet ist. In dem Außenumfang 4 des Wellenteiles 3 ist eine ringförmige äußere Umfangsnute 41 angeordnet.

Der Sicherungsring 5 umfasst gemäß einer bevorzugten Ausführungsform im wesentlichen ein Basisteil 52 und darin angeordnete seitliche Schenkelteile 54, 55, die zusammen eine etwa dreieckförmige Gestalt besitzen, wobei vorzugsweise die sich gegenüber liegenden freien Enden 57 und 58 der Schenkelteile 54 bzw. 55 in der Umfangsrichtung voneinander beabstandet sind. Das Basisteil 52 ist mit dem Schenkelteil 54 über einen vorzugsweise abgerundeten Eckbereich 53 verbunde. Entsprechend ist das Basisteil 52 über einen vorzugsweise abgerundeten Eckbereich 51 mit dem Schenkelteil 55 verbunden. Besonders bevorzugt entspricht die Form einem im wesentlichen gleichseitigen Dreieck, wobei die Endbereiche 56, 57 im Bereich der dritten Ecke angeordnet sind.

Die Figur 1 zeigt den Montagezustand der vorliegenden Sicherungsscheibe 5, in dem zumindest die Eckbereiche 51, 53 und die Endbereiche 56, 57 in die Innennute 21 des Ringteiles 1 und zumindest die mittleren Bereiche des Basisteiles 53 und der Schenkelteile 54 und 55 in die Umfangsnute 41 des Wellenteiles 3 eingreifen, um das Ringteil 1 und das Wellenteil 3 aneinander zu verriegeln, sodass sie gegen Relativbewegungen in axialer Richtung aneinander befestigt sind.

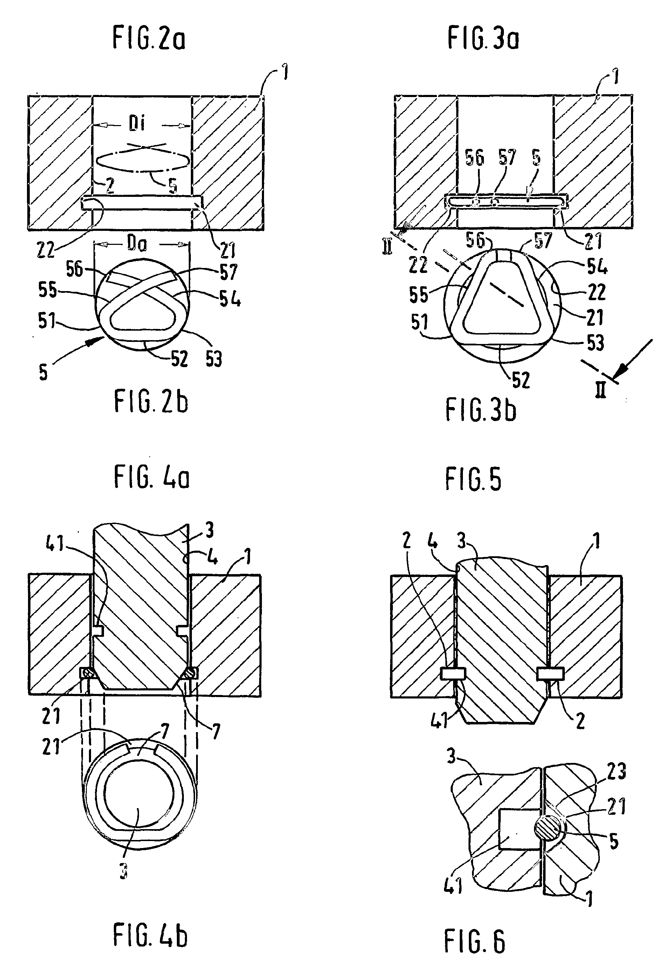

Im Folgenden werden nun im Zusammenhang mit den Figuren 2 bis 4 die Montageschritte zum Verbinden des Ringteiles 1 mit dem Wellenteil 3 näher erläutert.

Zunächst wird vor dem Einstecken des Wellenteiles 3 in das Ringteil 1 der Sicherungsring 5, dessen Basisteil 52 und dessen Schenkelteile 54 und 55 vorzugsweise jeweils geradlinig verlaufen, spiralförmig gemäß Figur 2b so zusammengedrückt, dass sein Außendurchmesser Da kleiner ist als der Innendruchmesser Di der Innenöffnung 2 des Ringteiles 1. Anschließend wird der so zusammengedrückte Sicherungsring 5 im Ringteil 1 in axialer Richtung desselben soweit verschoben, bis er in den Bereich der Innennute 21 gelangt. Der Sicherungsring 5 wird dann freigegeben, sodass er federnd aufschnappt und sich mit seinen Eckbereichen 51, 53 und seinen Endbereichen 56, 57 an der Bodenwand 22 der Innennute 21 abstützt. Dieser Zustand ist in den Figuren 3a und 3b dargestellt, wobei in der Figur 3b die Lage des Sicherungsringes 5 in der Figur 3a durch den Schnitt II-II angedeutet ist.

Gemäß Figur 4 wird nun das Wellenteil 3 in die Innenöffnung 2 des Ringteiles 1 eingeschoben, wobei das Wellenteil 3 in der Einschubrichtung gesehen an seinem Vorderende eine Phase 7 bzw. Anschrägung besitzt, die in den Innenbereich des Sicherungsringes 5 eingreift und diesen beim fortlaufenden Einschieben des Wellenteiles 3 in die Innenöffnung 2 wegen des fortlaufend größer werdenden Durchmessers der phase 7 aufweitet, bis er federnd auf dem Außenumfang 4 des Wellenteiles 3 aufsitzt. Ein Zustand, in den der Sicherungsring 5 gerade an der Phase 7 aufgeweitet wird, ist in der Figur 4b dargestellt.

Das Wellenteil 3 wird nun soweit in der Einschiebrichtung weitergeschoben, bis die Umfangsnute 41 in den Bereich der Innennute 21 und des darin angeordneten Sicherungsringes 5 gelangt, wobei dann die am Außenumfang des Wellenteiles 3 anliegenden Bereiche des Sicherungsringes 5 (insbesondere die mittleren Bereiche des Basisteiles 51 und der Schenkelteile 54, 55) federnd in die Innennute 41 einschnappen, um die Verriegelung des Wellenteiles 3 an dem Ringteil 1 zu bewirken und die in der Figur 1 dargestellte Gestalt der vorzugsweise bogenförmig nach außen verformten Schenkelteile 54, 55 und des Basisteiles 52 an dem Boden der Umfangsnute 41 des Wellenteiles 3, und die Eckbereiche 51, 53 sowie die Endbereiche 56, 57 an dem Boden 22 der Innennute 21 des Ringteiles 1 jeweils federnd anliegen.

Es wurde voranstehend ein Sicherungsring mit einer dreieckförmigen Gestalt erläutert. Es sind jedoch auch andere vielecke Formen denkbar, wobei es jeweils darauf ankommt, dass vorzugsweise abgerundete Eckbereiche des Sicherungsringes im Montagezustand desselben am Boden der Innennute 21 des Ringteiles 1 und Bereiche zwischen den Eckbereichen am Boden der Innennute 41 des Wellenteiles 3 anliegen. Besonders bevorzugt sind Ausgestaltungen des Sicherungsringes, bei denen die genannten Anlagepunkt der Teilbereiche möglichst gleichmäßig um den Innenumfang der Innennute 21 bzw. der Umfangsnute 21 verteilt sind.

Die Figur 6 zeigt eine Weiterbildung der Erfindung, bei der die Innennute 21 des Ringteiles 1. zwei in axialer Richtung schräg verlaufende Seitenwände 23 aufweist, so dass eine Lösung der hergestellten Verbindung zwischen Ringteil 1 und Wellenteil 3 durch Aufbringen einer entsprechenden Kraft in beiden axialen Richtungen möglich ist, wobei der Sicherungsring 5 an einer schräg verlaufenden Seitenwand 23 derart verformt wird, dass seine in die Innennute 21 eingreifenden Teilbereiche aus der Innennute 21 herausgelangen. Eine oder zwei entsprechende, schräge Seitenwände können auch an der Umfangsnute 41 vorgesehen werden, um bei Kraftaufbringung in axialer Richtung die in die Umfangsnute 41 eingreifenden Teilbereiche des Sicherungsringes 5 aus der Umfangsnute 41 herauszudrücken.

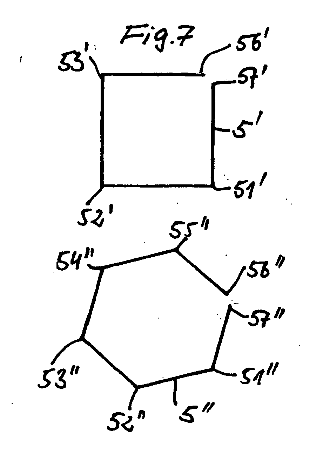

Die Figur 7 zeigt in schematischer Darstellung weitere bevorzugte Ausführungsformen des vorliegenden Sicherungsringes 5' und 5'' mit einer quadratischen bzw. einer fünfeckigen Form. Vieleckige Formen mit mehr als vier oder fünf Ecken sind ebenfalls denkbar.

Im Zusammenhang mit der vorliegenden Erfindung ist es von besonderer Bedeutung, dass die Endbereiche des Sicherungsringes 5, 5', 5'', 5''' jeweils im Bereich der Öffnung bzw. Teilung des Sicherungsringes 5, 5', 5'', 5''' angeordnet sind und dass die Öffnung bzw. Teilung jeweils am größten Durchmesser des Sicherungsringes 5, 5', 5'', 5''' vorliegt. Auf diese Weise wird sichergestellt, dass die Endbereiche 56, 57, 56', 57', 56'', 57'', 56''', 57''' des Sicherungsringes 5, 5', 5'', 5''' nach dem Einsetzen desselben in das Ringteil 1 und dem Verschieben zur Innennute 21 des Ringteiles 1 sowie dem Auffedern des Sicherungsringes 5, 5', 5'', 5''' in der Innennute 21 des Ringteiles 1 angeordnet sind. Durch diese Anordnung der Endbereiche 56, 57, 56', 57', 56'', 57'', 56''', 57''' in der Innennute 21 wird vorteilhafterweise verhindert, dass sich während der Montageschritte beim Einschieben des Wellenteiles 3 und auch danach im Montagezustand die Endbereiche 56, 57, 56', 57', 56'', 57'', 56''', 57''', die sich vorzugsweise an der Bodenwand 22 der Innennute 21 des Ringteiles 1 federnd abstützen, bewegt bzw. verschoben werden. Es wird daher eine besonders gute axiale Festlegung des Sicherungsringes 5, 5', 5'', 5''' am Ringteil 1 erreicht. Die Eckbereiche 51, 53, 51', 52', 53', 51'', 52'', 53'', 54'', 55'' der beschriebenen Ausführungsformen der Figuren 1, 7 und 8 greifen im Montagezustand ebenfalls in der Innennute 21 des Ringteiles 1 federnd ein. Die jeweils zwischen zwei Eckbereichen bzw. zwischen zwei Bereichen des größten Durchmessers liegenden mittleren Bereiche greifen jeweils in die Außennute 41 des Wellenteiles 3 federnd ein, um dieses axial und in Bezug auf das Ringteil 1 zu fixieren.

## Patentansprüche

1. Wellenteil und Ringteil mit einem Sicherungsring zur axialen Befestigung des Wellenteiles (3) in dem Ringteil (1), wobei das Wellenteil (3) eine Umfangsnute (41) aufweist und das Ringteil (1) eine Innennute (21) besitzt, wobei der Sicherungsring (5) erste Teilbereiche (56, 57, 51, 53) aufweist, die nach dem federnden Zusammendrücken des Sicherungsringes (5) derart, dass er in die Innenöffnung (2) des Ringteiles (1) einbringbar ist, dem Schieben des Sicherungsringes (5) in den Bereich der Innennute (21) und dem Freigeben und Auffedern des Sicherungsringes (5) in die Innennute (21) eingreifen, und zweite Teilbereiche (52, 54, 55) besitzt, die nach dem Einsetzen des Sicherungsringes (5) in die Innennute (21) aus der Innennute (21) herausragen und an einer Phase (7) des in die Innenöffnung (2) eingeschobenen Wellenteiles (3) federnd nach außen gedrückt werden, so dass der Sicherungsring (5) am Umfang des Wellenteiles (3) gleiten kann, bis er in den Bereich der Umfangsnute (41) gelangt und die zweiten Teilbereiche (52, 54, 55) federnd in diese einschnappen, **dadurch gekennzeichnet, dass** der Sicherungsring etwa die Form eines Vieleckes mit Seitenteilen und Eckbereichen besitzt, dass die ersten Teilbereiche durch die Eckbereiche (51', 52', 53', 51", 52", 53", 54", 55'') und die an die Öffnung des Sicherungsringes (5', 5") angrenzenden freien Endbereiche (56', 57', 56'', 57") jeweils gebildet sind, und dass die zweiten Teilbereiche durch die mittleren Bereiche der Seitenteile des Vieleckes gebildet sind.

2. Wellenteil und Ringteil mit einem Sicherungsring nach Anspruch 1, **dadurch gekennzeichnet, dass** der Sicherungsring etwa die Form eines aus einem Basisteil (52) und zwei daran anschließenden Schenkelteilen (54, 55) gebildeten Dreiecks besitzt.

3. Wellenteil und Ringteil mit einem Sicherungsring nach Anspruch 2, **dadurch gekennzeichnet, dass** die Schenkelteile (54, 55) und das Basisteil (52) etwa ein gleichseitiges Dreieck bilden.

4. Wellenteil und Ringteil mit einem Sicherungsring nach einem der Ansprüche 1 bis 3, **dadurch gekennzeichnet, dass** die Eckbereiche (51, 53) abgerundet sind.

5. Wellenteil und Ringteil mit einem Sicherungsring nach Anspruch 4, **dadurch gekennzeichnet, dass** die Rundung der Eckbereiche (51, 53) an den Radius des Bodens (22) der Innennute (21) angepasst ist.

6. Wellen- und Ringteil mit einem Sicherungsring nach einem der Ansprüche 1 bis 5, **dadurch gekennzeichnet, dass** er im Materialquerschnitt kreisförmig, oval, rechteckig, quadratisch oder vieleckig ausgebildet ist.

7. Wellen- und Ringteil mit einem Sicherungsring nach einem der Ansprüche 1 bis 6, **dadurch gekennzeichnet, dass** die Innennute (21) des Ringteiles (1) an wenigstens einer Seite schräg angephast ist sodass die Verbindung zwischen Wellenteil (3) und Ringteil (1) unter Aufbringung einer axialen Kraft lösbar ist.

8. Wellen- und Ringteil mit einem Sicherungsring nach einem der Ansprüche 1 bis 7, **dadurch gekennzeichnet, dass** die Umfangsnute (41) des Wellenteiles (3) ein oder zwei in axialer Richtung schräg verlaufende Seitenwände aufweist, sodass die in die Umfangsnute (41) eingreifenden Teilbereiche des Sicherungsringes (5) bei einer Kraftaufbringung in axialer Richtung aus der Umfangsnute (41) herausgelangen.

## Claims

1. A shaft member and a ring member together with a retaining ring for axially fixing shaft member (3) in position inside ring member (1), the shaft member (3) having a circumferentially extending peripheral groove (41) therein, the ring member (1) having an interior groove (21) therein, and the retaining ring (5) having first portions (56, 57, 51, 53) which engage interior groove (21) following resilient compression of retaining ring (5) so that it can enter bore (2) of ring member (1), the shifting of retaining ring (5) into the area of interior groove (21) and the release and resilient opening of retaining ring (5), and having second portions (52, 54, 55) which, following the engagement of retaining ring (5) in interior groove (21), protrude from said interior groove (21) and are resiliently urged outwards at a bevel (7) of the shaft member (3) positioned inside bore (2) so that retaining ring (5) can slide along the periphery of shaft member (3) until it reaches the area of circumferential groove (41) and said second portions (52, 54, 55) resiliently snap thereinto, **characterized by** said retaining ring generally forming a polygon having side portions and corner portions, and by said first portions each comprising corner portions (51', 52', 53', 51 ", 52", 53", 54", 55") and the free end portions (56', 57', 56", 57") adjacent the opening in retaining ring (5', 5"), respectively, and by said second portions comprising the central segments of the side portions of said polygon.

2. The shaft member and the ring member together with a retaining ring as in claim 1, **characterized by** the retaining ring forming a triangle having a base portion (52) and a pair of adjacent leg portions (54, 55) connected thereto.

3. The shaft member and the ring member together with a retaining ring as in claim 2, **characterized by** leg portions (54, 55) and base portion (52) generally forming an isosceles triangle.

4. The shaft member and the ring member together with a retaining ring as in any of claims 1 to 3, **characterized by** corner portions (51, 53) being rounded.

5. The shaft member and the ring member together with a retaining ring as in claim 4, **characterized by** the curvature of corner portions (51, 53) being matched to the radius of the bottom of interior groove (21).

6. The shaft and ring members together with a retaining ring as in any of claims 1 to 5, **characterized by** the cross section of the material being circular, oval, rectangular, square or polygonal in shape.

7. The shaft and ring members together with a retaining ring as in any of claims 1 to 6, **characterized by** interior groove (21) of ring member (1) being bevelled on at least one side thereof so that the connection of shaft member (3) with ring member (1) is separable by applying an axial force.

8. The shaft and ring members together with a retaining ring as in any of claims 1 to 7, **characterized by** interior groove (41) of shaft member (3) having one or two sidewalls inclined in an axial direction so that, as an axial force is applied, the retaining ring (5) portions engaging peripheral groove (41) move therefrom.

## Revendications

1. Pièce en forme d'arbre et pièce annulaire avec circlip pour la fixation axiale de la pièce en forme d'arbre (3) dans la pièce annulaire (1), **caractérisés en ce que** l'arbre (3) présente une rainure circonférentielle (41) et que la pièce annulaire présente une rainure intérieure (21), le circlip (5) présentant d'une part une première série de sections partielles (56, 57, 51, 53) qui, le circlip (5) ayant été comprimé comme un ressort de telle façon que le circlip (5) puisse se loger dans l'ouverture intérieure (2) de la pièce annulaire (1), après la poussée du circlip (5) vers la rainure intérieure (21) et après le déblocage et la détente du circlip (5), s'engrènent dans la rainure (21); d'autre part une deuxième série de sections partielles (52, 54, 56) qui, après l'engagement du circlip (5) dans la rainure intérieure (21), dépassent de cette rainure intérieure (21) et qui sont poussées sur un chanfrein (7) de la pièce en forme d'arbre (3) engagée dans l'ouverture intérieure (2), comme par un ressort, vers l'extérieur de telle manière que le circlip (5) puisse glisser sur la circonférence de la pièce en forme d'arbre (3) jusqu'à ce qu'il arrive à la hauteur de la rainure circonférentielle et les sections partielles (52, 54, 55) de la deuxième série s'engagenet comme un ressort dans cette rainure, **caractérisé en ce que** le circlip a, plus ou moins, la forme d'un polygone avec des flancs et des sections angulaires, que les première sections partielles sont formées par les sections angulaires (51', 52', 53', 51''; 52'', 53'', 54'', 55'') et les sections terminales libres (56', 57', 56'', 57'') adjacentes à l'ouverture du circlip (5', 5'') et que les deuxièmes sections partielles sont formées par les sections du milieu des flancs du polygone.

2. Pièce en forme d'arbre et pièce annulaire avec circlip selon la revendication 1, **caractérisées en ce que** le circlip a plus ou moins la forme d'un traingle formé par une partie de base (52) et par deux cotés.

3. Pièce en forme d'arbre et pièce annulaire avec circlip selon la revendication 2, **caractérisées en ce que** les cotés (54, 55) et la partie de base (52) forment plus ou moins un triangle équilatéral.

4. Pièce en forme d'arbre et pièce annulaire avec circlip selon les revendications 1 à 3, **caractérisées en ce que** les sections angulaires (51, 53) sont arrondies.

5. Pièce en forme d'arbre et pièce annulaire avec circlip selon la revendication 4, **caractérisées en ce que** la courbure des sections angulaires (51,53) est adaptée au rayon du fond (22) de la rainure intérieure (21).

6. Pièce en forme d'arbre et pièce annulaire avec circlip selon les revendications 1 à 5, **caractérisées en ce que** la coupe transversale du circlip présente une forme circulaire, ovale, rectangulaire, quadratique ou polygonale.

7. Pièce en forme d'arbre et pièce annulaire avec circlip selon les revendications 1 à 6, **caractérisées en ce que** la rainure intérieure (21) de la pièce annulaire (1) est chanfreinée au moins sur un coté, permettant le desserrage de l'assemblage entre la pièce en forme d'arbre et la pièce annulaire sous l'application d'une force axiale.

8. Pièce en forme d'arbre et pièce annulaire avec circlip selon les revendications 1 à 7, **caractérisées en ce que** la rainure circonférentielle (41) de la pièce en forme d'arbre (3) présente une ou deux parois latérales obliques par rapport à l'axe, ce qui fait que les sections partielles du circlip (5) qui s'engrènent dans la rainure circonférentielle (41) dépassent la rainure circonférentielle (41) sous l'application d'une force axiale.
